# FASCICULE DE BREVET EUROPEEN

(11) **EP 1 828 737 B1**
(45) Date de publication et mention de la délivrance du brevet: **15.02.2012**
(21) Numéro de dépôt: 05857273.6
(22) Date de dépôt: 14.12.2005
(51) Int. Cl.: G01M 1/00

(54) **METHODE DE DETECTION DE COMBUSTION ANORMALE POUR MOTEURS A COMBUSTION INTERNE**
VERFAHREN ZUR DETEKTION VON ABNORMALER VERBRENNUNG FÜR VERBRENNUNGSMOTOR
METHOD FOR DETECTING ABNORMAL COMBUSTION FOR INTERNAL COMBUSTION ENGINES

(30) Priorité: 17.12.2004 FR 0413542
(43) Date de publication de la demande: 05.09.2007
(73) Titulaire: Institut Français du Pétrole, 92852 Rueil Malmaison Cedex (FR)
(72) Inventeur: GAUTROT, Xavier, 92500 Rueil Malmaison (FR); MONNIER, Gaëtan, F-92500 Rueil Malmaison (FR); SIMONET, Laurent, F-92500 Rueil Malmaison (FR)
(86) Numéro de dépôt international: PCT/FR2005/003210
(87) Numéro de publication internationale: WO 2006/067333

(56) Documents cités:
- DE-A1- 19 859 310
- FR-A- 2 558 529
- US-A- 3 393 557
- US-A- 3 540 262
- US-A- 5 080 068

## Description

La présente invention se rapporte à une méthode pour détecter une combustion anormale dans une chambre de combustion d'un moteur à combustion interne.

Elle concerne plus particulièrement mais non exclusivement une telle méthode appliquée à un moteur suralimenté à allumage commandé et préférentiellement de type essence.

Dans un tel moteur, la chambre de combustion délimitée par le haut du piston et la culasse contient un mélange carburé qui est à même de subir une combustion sous l'effet d'un allumage commandé, comme une bougie.

Il a pu être constaté que cette combustion est la source de différents bruits de combustion dont certains peuvent endommager gravement le moteur.

Un premier bruit est le bruit de fond dont la fréquence vibratoire est de très faible amplitude et quasiment constant. Ce bruit est le résultat de la propagation de la combustion qui se propage normalement selon un front de flamme à partir de la bougie. Ce type de bruit est suffisamment bas pour ne pas risquer de détériorer le moteur.

Un deuxième bruit, qui est un bruit parasite, est le résultat d'une combustion indésirable, dénommé cliquetis dans la chambre de combustion. Ce cliquetis est une auto-inflammation brutale et localisée d'une partie du mélange carburé avant que n'arrive le front de flamme issu de l'allumage du mélange carburé par la bougie. Comme cela est généralement connu, ce cliquetis produit des vibrations de plus fortes amplitudes que le bruit de fond et à des fréquences données. Ce cliquetis conduit à une augmentation locale de la pression et peut engendrer, en cas de répétitions, des effets destructifs sur le moteur et principalement au niveau du piston.

Enfin, un troisième bruit qui est généré par une combustion anormale. Cette combustion anormale affecte principalement les moteurs dont la taille et/ou la cylindrée a été réduite tout en conservant la même puissance et/ou le même couple que des moteurs conventionnels, plus connu sous le terme anglais de "downsizing". Ce type de moteurs, principalement de type essence, est fortement suralimenté et cette combustion anormale se produit généralement à bas régimes de fonctionnement. En effet, sur une telle plage de fonctionnement, le calage de la combustion du mélange carburé est loin de l'optimum. Plus précisément, l'allumage se produit après que le piston ait dépassé son point mort haut (PMH). Ceci permet d'avoir une courbe de pression dite "à doubles bosses" pour laquelle la première bosse est le résultat de la compression et de la descente du piston après le PMH qui est suivi par une autre bosse résultant de l'allumage par la bougie du mélange carburé et de sa combustion tout au long de la phase de détente dans la chambre de combustion. Cependant, et cela compte tenu des fortes pressions et des températures élevées atteintes dans la chambre de combustion par la suralimentation, une combustion anormale se produit bien avant le moment où se réalise l'allumage du mélange carburé par la bougie. Cette combustion résulte d'un autoallumage avec un front de flamme d'une grande partie du mélange carburé au voisinage du PMH du piston et se produit très en amont de l'allumage du mélange carburé par la bougie. Cette combustion anormale produit un bruit sourd de grondement et est dénommée pour cette raison par les spécialistes une combustion de type "rumble".

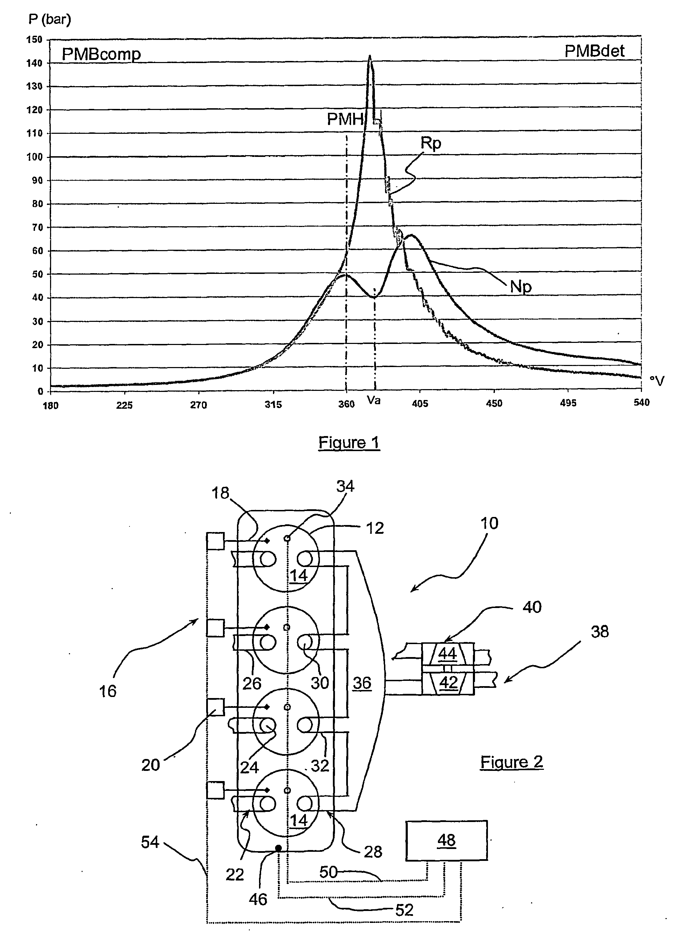

Pour illustrer ce qui précède, on se rapportera à la figure 1 qui est un graphique avec une courbe Np montrant l'évolution de la pression (en bar) dans la chambre de combustion en fonction de l'angle de vilebrequin (en °v) lors d'une combustion normale et une courbe Rp montrant l'évolution de cette pression en fonction du même angle de vilebrequin lors d'une combustion anormale avec bruit sourd de grondement ou combustion type "rumble". Cette évolution est considérée lors d'une phase de la course du piston allant du point mort bas compression (PMBcomp à 180°v) jusqu'au point mort bas détente (PMBdet à 540°v).

Ainsi pour une combustion normale (courbe Np), c'est-à-dire sans cliquetis ni bruit sourd de grondement ou "rumble", le mélange carburé est comprimé dans la chambre de combustion jusqu'à environ 50 bars lors du mouvement du piston allant du point mort bas compression (PMBcomp) jusqu'au voisinage du point mort haut (PMH à environ 360° d'angle de vilebrequin). A partir de ce PMH, le piston a une course en sens inverse et la pression décroît jusqu'à environ 40 bars à un angle de vilebrequin Va de l'ordre de 380°v. A cet angle Va, l'allumage du mélange carbure comprimé est réalisé par la bougie. Ceci procure donc une combustion de ce mélange carburé et une augmentation de pression aux environs de 60 bars à environ 405° d'angle de vilebrequin. Le piston continue son mouvement de descente jusqu'au PMBdet et la pression décroît pour être voisine de la pression atmosphérique.

Pour une combustion de type "rumble" (courbe Rp), compte tenu des conditions de pressions et de température du mélange carburé dans la chambre de combustion, il se produit un autoallumage de ce mélange avant que le piston n'atteigne le PMH. Cet autoallumage génère une très forte et brutale augmentation de pression dans la chambre de combustion, pression qui dépasse les 140 bars et cela bien avant que l'allumage du mélange carburé ne soit réalisé par la bougie. Cette pression décroît ensuite, de par la course du piston de son PMH vers son PMBdet jusqu'au niveau de la pression atmosphérique au voisinage du PMBdet.

Cette combustion de type "rumble" entraîne donc des niveaux de pressions très élevés à l'intérieur de la chambre de combustion qui peuvent produire une destruction partielle ou totale de l'équipage mobile du moteur, comme le piston ou la bielle, et par conséquent une mise hors service du moteur. Le document US 3 393 557 A montre un exemple de détection d'une telle combustion.

La présente invention se propose donc de pouvoir identifier une combustion anormale de type "rumble" avec les dispositifs et systèmes couramment utilisés dans les moteurs pour ensuite prendre les mesures permettant de l'éviter dans la suite du fonctionnement du moteur.

A cet effet, la présente invention concerne une méthode de combustion anormale dans la chambre de combustion d'au moins un cylindre d'un moteur à combustion interne suralimenté à allumage commandé, caractérisée en ce que :
- on mesure une grandeur liée à la combustion du mélange carburé dans la chambre,
- on produit un signal dont l'amplitude dépend de l'amplitude de la grandeur mesurée,
- on compare l'amplitude du signal produit à l'amplitude d'un signal-seuil correspondant à l'amplitude d'un signal lors d'une combustion avec cliquetis,
- on détermine la présence d'une combustion anormale de type bruit sourd de grondement ou "rumble" dans la chambre de combustion lorsque l'amplitude du signal produit dépasse d'une valeur significative l'amplitude dudit signal-seuil.

La grandeur peut correspondre aux vibrations générées dans la chambre de la combustion.

La grandeur peut aussi correspondre à la pression générée dans la chambre de combustion.

La grandeur peut également correspondre au courant d'ionisation lors de la combustion du mélange carburé dans la chambre de la combustion.

On peut utiliser les moyens de détection de cliquetis pour capter les vibrations générées par la combustion.

Après la détermination de la présence d'une combustion anormale de type "rumble", on peut agir sur les paramètres d'injection de carburant pour empêcher que le phénomène ne se reproduise.

On peut agir sur le phasage d'injection de carburant sur au moins un cycle après ladite détermination.

On peut aussi agir sur la quantité de carburant injecté sur au moins un cycle après ladite détermination.

Les autres caractéristiques et avantages de l'invention apparaîtront à la lecture de la description donnée ci-après en se référant aux graphiques annexés où :
- la figure 1 montre des courbes de pressions pour une combustion classique et pour une combustion anormale,
- la figure 2 montre un moteur utilisant la méthode de détection - selon l'invention et
- la figure 3 montre des courbes de niveaux de signal résultant d'une combustion classique, d'une combustion avec cliquetis et d'une combustion anormale de type "rumble".

Sur la figure 2, un moteur à combustion interne 10 suralimenté à allumage commandé, en particulier de type essence, comprend au moins un cylindre 12 avec une chambre de combustion 14 à l'intérieur de laquelle se produit la combustion d'un mélange d'air suralimenté et de carburant.

Le cylindre comprend au moins un moyen d'alimentation en carburant sous pression 16, par exemple sous la forme d'un injecteur de carburant 18 contrôlé par une vanne 20, qui débouche dans la chambre de combustion, au moins un moyen d'admission d'air 22 avec une soupape 24 associée à une tubulure d'admission 26, au moins un moyen d'échappement des gaz brûlés 28 avec une soupape 30 et une tubulure d'échappement 32 et au moins un moyen d'allumage 34, comme une bougie, qui permet de générer une ou plusieurs étincelles permettant d'enflammer le mélange carburé présent dans la chambre de combustion.

Les tubulures 32 des moyens d'échappement 28 de ce moteur sont raccordées à un collecteur d'échappement 36 lui-même connecté à une ligne d'échappement 38. Un dispositif de suralimentation 40, par exemple un turbocompresseur ou un compresseur volumétrique, est placé sur cette ligne d'échappement et comprend un étage d'entraînement 42 avec une turbine balayée par les gaz d'échappement circulant dans la ligne d'échappement et un étage de compression 44 qui permet de faire admettre un air d'admission sous pression dans les chambres de combustion 14 par les tubulures d'admission 26.

Le moteur comprend habituellement des moyens de détection de cliquetis 46 disposés sur le carter cylindre du moteur. Ces moyens de détection sont généralement constitués par un accéléromètre qui permet de générer un signal représentatif de l'apparition de cliquetis dans la chambre de combustion sous la forme d'ondes de vibration.

Le moteur comprend également une unité de calcul et de commande 48, dénommée calculateur-moteur, qui est reliée par des conducteurs (pour certains bidirectionnels) aux différents organes et capteurs du moteur de façon à pouvoir recevoir les différents signaux émis par ces capteurs, comme la température de l'eau ou la température de l'huile, pour les traiter par calcul et ensuite commander les organes de ce moteur pour assurer son bon fonctionnement.

Ainsi, dans le cas de l'exemple montré à la figure 2, les bougies 34 sont reliées par des conducteurs 50 au calculateur-moteur 48 de façon à commander le moment de l'allumage du mélange carburé, l'accéléromètre 46 est connecté par une ligne 52 à ce même calculateur-moteur pour lui envoyer les signaux représentatifs de vibrations dans les chambres de combustion et les vannes 20 de commande des injecteurs 18 sont raccordées par des conducteurs 54 au calculateur 48 pour commander l'injection de carburant dans les chambres de combustion.

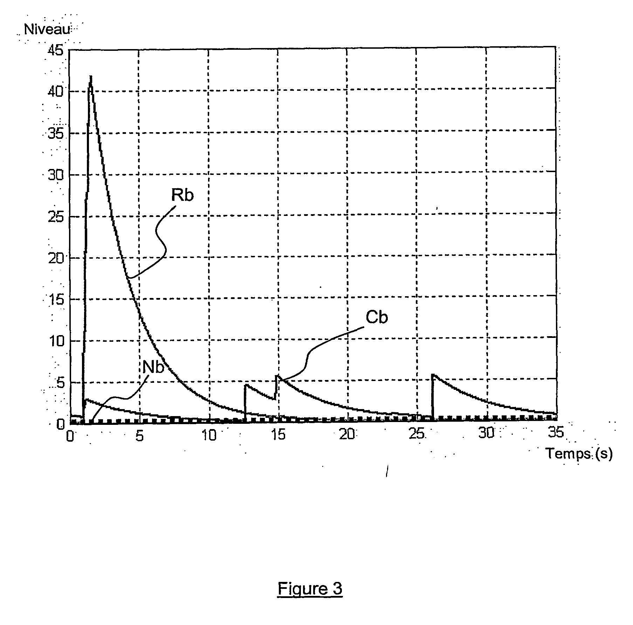

On se reporte maintenant à la figure 3 qui illustre des courbes de niveau de signal issu de l'accéléromètre pour une combustion normale (Nb), pour combustion avec cliquetis (Cb) et pour une combustion anormale de type "rumble" (Rb). Ces courbes sont des courbes avec intégration du niveau de bruit capté au cours du temps (en secondes).

Il peut être remarqué sur cette figure que la courbe intégrée Nb du niveau de signal pour une combustion normale (représenté en pointillé sur cette figure) est quasiment constante et sensiblement voisine de 0. La courbe de niveau de signal t Cb pour une combustion de cliquetis oscille entre un niveau d'environ 2 à un niveau d'environ 6 alors que la courbe de niveau de signal Rb pour une combustion de type "rumble" dépasse largement le niveau 40.

A la lecture de cette figure, il peut être évalué que l'amplitude des vibrations de la combustion de type "rumble" produit un niveau de signal dépassant d'une manière significative le niveau de signal résultant de l'amplitude des vibrations d'une combustion normale et d'une combustion avec cliquetis.

En effet, la combustion de type "rumble" produit un niveau de signal environ 40 fois supérieur à celui du niveau de signal d'une combustion normale et à environ 7 fois supérieur à celui du niveau de signal maximum d'une combustion avec cliquetis.

Dans le cas d'une combustion avec cliquetis, il peut arriver que le niveau de signal soit voisin de 10 et, dans ce cas, la combustion anormale de type "rumble" sera à un niveau de signal à environ 4 fois supérieur à celui du niveau de signal de cette combustion avec cliquetis.

Ainsi, lors du fonctionnement du moteur décrit en relation avec la figure 1, les moyens de détection de cliquetis 46 captent les vibrations générées par la combustion dans les chambres de combustion 14 des cylindres 12. Ces informations sont envoyées sous forme de signal par la ligne 52 au calculateur-moteur 48. Ce calculateur produit un signal dont l'amplitude correspond à l'amplitude des vibrations captées puis ce signal est comparé avec des signaux-seuils de niveau de bruit représentatifs d'une combustion normale et d'une combustion avec cliquetis. La comparaison du signal reçu de l'accéléromètre avec ceux de valeurs-seuils permet au calculateur-moteur de déterminer la présence d'une combustion anormale de type "rumble" dans la chambre de combustion. A titre d'exemple et comme cela est illustré sur la figure 3, la combustion anormale de type "rumble "sera détectée pour un signal produit supérieur à environ 40 fois la valeur-seuil de la combustion normale ou supérieure à 4 fois la valeur-seuil de la combustion avec cliquetis. Ce calculateur-moteur enverra ensuite des instructions de commande au moyen d'alimentation en carburant sous pression 16 par les conducteurs 54 pour modifier les paramètres d'injection de façon à ce que cette combustion anormale de type "rumble" ne se reproduise pas lors des cycles suivants. Préférentiellement, le calculateur-moteur agira soit sur le phasage d'injection de carburant, soit sur la quantité de carburant à injecter, soit sur les deux, ces actions étant réalisées sur au moins un cycle après la détection de la combustion anormale.

Bien entendu et cela sans sortir du cadre de l'invention, toutes autres grandeurs liées au déroulement de la combustion dans la chambre 14 peuvent être utilisées pour déceler une combustion de type "rumble". Ainsi, il a été décrit jusqu'à maintenant un niveau de signal représentatif des vibrations générées par la combustion, mais il peut aussi être utilisé la grandeur liée à la pression interne à la chambre de combustion grâce à des capteurs de pression cylindre. Dans le cas illustré à la figure 1 donnée uniquement à titre d'exemple, cette pression est supérieure d'environ 4 fois à la pression de la valeur-seuil représentative de la pression interne dégagée par la combustion au moment de l'allumage de la bougie. Egalement, il peut être utilisé un signal représentatif du courant d'ionisation du mélange carburé en cours de combustion, courant qui peut être capté au niveau des électrodes de la bougie.

## Revendications

1. Méthode de détection de combustion anormale dans la chambre de combustion (14) d'au moins un cylindre (12) d'un moteur à combustion interne suralimenté à allumage commandé, **caractérisée en ce que** :
- on mesure une grandeur liée à la combustion du mélange carburé dans la chambre (14),
- on produit un signal dont l'amplitude dépend de l'amplitude de la grandeur mesurée,
- on compare l'amplitude du signal produit à l'amplitude d'un signal-seuil correspondant à l'amplitude d'un signal lors d'une combustion avec cliquetis,
- on détermine la présence d'une combustion anormale de type bruit sourd de grondement ou "rumble" dans la chambre de combustion lorsque l'amplitude du signal produit dépasse d'une valeur significative l'amplitude dudit signal-seuil.

2. Méthode de détection de combustion anormale selon la revendication 1, **caractérisée en ce que** la grandeur correspond aux vibrations générées dans la chambre de la combustion.

3. Méthode de détection de combustion anormale selon la revendication 1, **caractérisée en ce que** la grandeur correspond à la pression générée dans la chambre de combustion.

4. Méthode de détection de combustion anormale selon la revendication 1, **caractérisée en ce que** la grandeur correspond au courant d'ionisation lors de la combustion du mélange carburé dans la chambre de la combustion.

5. Méthode de détection de combustion anormale selon l'une des revendications précédentes, **caractérisée en ce que** l'on utilise les moyens de détection de cliquetis (46) pour capter les vibrations générées par la combustion.

6. Méthode de détection de combustion anormale selon la revendication 1, **caractérisée en ce que**, après la détermination de la présence d'une combustion anormale de type "rumble", on agit sur les paramètres d'injection de carburant pour empêcher que le phénomène ne se reproduise.

7. Méthode de détection de combustion anormale selon la revendication 6, **caractérisée en ce qu'**on agit sur le phasage d'injection de carburant sur au moins un cycle après ladite détermination.

8. Méthode de détection de combustion anormale selon la revendication 6, **caractérisée en ce qu'**on agit sur la quantité de carburant injecté sur au moins un cycle après ladite détermination.

## Claims

1. A method for detecting abnormal combustion in the combustion chamber (14) of at least one cylinder (12) of a spark-ignition supercharged internal-combustion engine, **characterized in that** it comprises:
- measuring a quantity linked with the combustion of the fuel mixture in chamber (14),
- producing a signal whose amplitude depends on the amplitude of the measured quantity,
- comparing the amplitude of the signal produced with the amplitude of a threshold signal corresponding to the amplitude of a signal during combustion with engine knock,
- determining the presence of an abnormal combustion of rumble type in the combustion chamber when the amplitude of the signal produced exceeds the amplitude of said threshold signal by a significant value.

2. An abnormal combustion detection method as claimed in claim 1, **characterized in that** the quantity corresponds to the vibrations generated in the combustion chamber.

3. An abnormal combustion detection method as claimed in claim 1, **characterized in that** the quantity corresponds to the pressure generated in the combustion chamber.

4. An abnormal combustion detection method as claimed in claim 1, **characterized in that** the quantity corresponds to the ionization current during combustion of the fuel mixture in the combustion chamber.

5. An abnormal combustion detection method as claimed in any one of preceding claims, **characterized in that** knock detection means (46) are used to pick up the vibrations generated by combustion.

6. An abnormal combustion detection method as claimed in claim 1, **characterized in that**, after determining the presence of a rumble type abnormal combustion, one acts on the fuel injection parameters to prevent the phenomenon from occurring again.

7. An abnormal combustion detection method as claimed in claim 6, **characterized in that** one acts on the fuel injection timing over at least one cycle after said determination.

8. An abnormal combustion detection method as claimed in claim 6, **characterized in that** one acts on the amount of fuel injected over at least one cycle after said determination.

## Patentansprüche

1. Verfahren zur Erkennung der anormalen Verbrennung im Brennraum (14) mindestens eines Zylinders (12) einer aufgeladenen Brennkraftmaschine mit Fremdzündung, **dadurch gekennzeichnet, dass**
- eine Größe gemessen wird, die mit der Verbrennung des Kraftstoff-Luft-Gemischs im Brennraum (14) verbunden ist,
- ein Signal erzeugt wird, dessen Amplitude von der Amplitude der gemessenen Größe abhängt,
- die Amplitude des erzeugten Signals mit der Amplitude eines Schwellensignals verglichen wird, das einem Signal bei einer klopfenden Verbrennung entspricht,
- das Bestimmen des Vorhandenseins einer anormalen Verbrennung des Typs Rumpeln/Rattern oder "rumble" im Brennraum, wenn die Amplitude des erzeugten Signals einen signifikanten Amplitudenwert dieses Schwellensignals übersteigt.

2. Verfahren zur Erkennung der anormalen Verbrennung nach Anspruch 1, **dadurch gekennzeichnet, dass** die Größe den Vibrationen entspricht, die im Brennraum erzeugt werden.

3. Verfahren zur Erkennung der anormalen Verbrennung nach Anspruch 1, **dadurch gekennzeichnet, dass** die Größe dem Druck entspricht, der im Brennraum erzeugt wird.

4. Verfahren zur Erkennung der anormalen Verbrennung nach Anspruch 1, **dadurch gekennzeichnet, dass** die Größe dem lonisierungsstrom bei der Verbrennung des Kraftstoff-Luft-Gemischs im Brennraum entspricht.

5. Verfahren zur Erkennung der anormalen Verbrennung nach einem der vorherigen Ansprüche, **dadurch gekennzeichnet, dass** Klopferkennungsmittel (46) eingesetzt werden, um die durch die Verbrennung erzeugten Vibrationen zu erfassen.

6. Verfahren zur Erkennung der anormalen Verbrennung nach Anspruch 1, **dadurch gekennzeichnet, dass** nach der Bestimmung des Vorhandenseins einer anormalen Verbrennung des Typs Lauf-Rumpelgeräusch oder "rumble" auf die Kraftstoffeinspritzparameter eingewirkt wird, um zu verhindern, dass das Phänomen sich wiederholt.

7. Verfahren zur Erkennung der anormalen Verbrennung nach Anspruch 6, **dadurch gekennzeichnet, dass** in mindestens einem Zyklus nach dieser Bestimmung auf die Kraftstoffeinspritzphase eingewirkt wird.

8. Verfahren zur Erkennung der anormalen Verbrennung nach Anspruch 6, **dadurch gekennzeichnet, dass** in mindestens einem Zyklus nach dieser Bestimmung auf die Kraftstoffeinspritzmenge eingewirkt wird.
